# EUROPÄISCHE PATENTSCHRIFT

(11) **EP 0 923 747 B1**
(45) Veröffentlichungstag und Bekanntmachung des Hinweises auf die Patenterteilung: **01.12.2004**
(21) Anmeldenummer: 97940157.7
(22) Anmeldetag: 04.09.1997
(51) Int. Cl.: G02B 3/00, G02B 27/09

(54) **OPTISCHES STRAHLFORMUNGSSYSTEM**
OPTICAL BEAM SHAPING SYSTEM
SYSTEME DE FORMATION DE FAISCEAU OPTIQUE

(30) Priorität: 05.09.1996 DE 19635942
(43) Veröffentlichungstag der Anmeldung: 23.06.1999
(73) Patentinhaber: Hentze-Lissotschenko Patentverwaltungs GmbH & Co.KG, 25870 Norderfriedrichskoog (DE)
(72) Erfinder: Hentze-Lissotschenko Patentverwaltungs GmbH & Co.KG, 25870 Norderfriedrichskoog (DE)
(74) Vertreter: Fritz, Edmund Lothar, Dipl.-Chem.
(86) Internationale Anmeldenummer: PCT/EP1997/004805
(87) Internationale Veröffentlichungsnummer: WO 1998/010314

(56) Entgegenhaltungen:
- EP-A- 0 232 037
- EP-A- 0 598 546
- DE-A- 4 141 937
- GB-A- 2 154 756
- US-A- 4 078 854
- US-A- 4 431 266
- US-A- 4 859 043

## Beschreibung

Die vorliegende Erfindung betrifft ein optisches Strahlformungssystem gemäß dem Oberbegriff des Anspruchs 1.

Als optische Strahlformungssysteme bezeichnet man allgemein Anordnungen von optischen Elementen, mit denen ein eingestrahltes Lichtstrahlbündel hinsichtlich seiner Strahlparameter definiert modifiziert wird. ln der Praxis treten die hauptsächlichen Anwendungsfälle auf, dass für ein Strahlbündel im Querschnitt eine definierte geometrische Form und Größe, beispielsweise kreisrund, rechteckig oder gitterförmig oder dergleichen und/oder eine über seinen Querschnitt definierte Intensitätsverteilung gefordert wird. Häufig müssen beide Eigenschaften gleichzeitig beeinflusst werden, beispielsweise wenn die Lichtquelle, die das Eingangs-Strahlbündel für das Strahlformungssystem liefert, ein Strahlbündel mit ungleichmäßiger Intensitätsverteilung und unregelmäßigen geometrischen Abmessungen liefert, jedoch für das Ausgangs-Strahlbündel des Strahlformungssystems hinsichtlich dieser Eigenschaften definierte Vorgaben gemacht werden.

Nach dem Stand der Technik sind beispielsweise aus der EP 0 232 037 A2 optische Strahlformungssysteme bekannt, in die ein Lichtstrahlbündel mit ungleichmäßiger Energieverteilung eingestrahlt werden kann, wobei deren Ausgangs-Strahlbündel über seinen Querschnitt eine gleichmäßige Intensitätsverteilung aufweist. Derartige Strahlformungssysteme werden auch als Homogenisierer bezeichnet.

Der vorgenannte Homogenisierer weist neben konventionellen optischen Elementen, wie beispielsweise Sammellinsen mit positiv gekrümmten, d.h. konvexen Grenzflächen, die den gesamten Strahlquerschnitt des eingeleiteten Strahlbündels erfassen, auch sogenannte Linsenarrays auf, die aus Linsen zusammengesetzt sind, die jeweils nur einen Teil des Strahtquerschnitts, d. h. Teilstrahlbündel, erfassen.

Bei optischen Homogenisierern hat sich eine Bauform durchgesetzt, bei der im Strahlengang zueinander gekreuzte Zylinderlinsenarrays angeordnet sind. Teilweise werden diese Arrays noch aus einzelnen Zylinderlinsen-Elementen zusammengefügt; es sind jedoch auch bereits einfache ebene Zylinderlinsenarrays erhältlich, die aus einem monolithischen Glas- oder Kunststoffblock geschliffen sind.

Mit derartigen, nach dem Stand der Technik bekannten monolithischen optischen Elementen sind bisher allerdings ausschließlich Homogenisierer realisierbar, die zudem den Einsatz zusätzlicher optischer Elemente, wie Linsen oder dgl. erfordern. Um hingegen nicht nur wie beim Homogenisierer eine über den Querschnitt vergleichmäßigte Intensitätsverteilung zu erreichen, sondern ein definiertes Intensitätsprofil in einer definierten geometrischen Form ausgehend von beliebig geformten Eingangs-Strahlbündeln zu formen, ist es nach dem Stand der Technik erforderlich, zunächst den Eingangsstrahl zu homogenisieren, um dann im weiteren Strahlverlauf zusätzliche Strahlformungssysteme zwischenzuschalten. So ist es beispielsweise bekannt, durch die Verwendung von Absorptionsfiltern oder Masken ein Intensitätsprofil vorzugeben. Eine geometrische Strahlformung wird durch Einfügung entsprechend geformter Masken in den Strahlengang erreicht.

Der Nachteil der vorgenannten geometrischen und Intensitäts-Strahlformungssysteme liegt auf der Hand: der weitaus überwiegende Teil der eingeleiteten Strahlenergie wird in Filtern oder den undurchlässigen Bereichen der Masken absorbiert und steht im ausgehenden Strahlbündel nicht mehr als Lichtenergie zur Verfügung. In der Praxis geht bei Strahlformungssystemen nach dem Stand der Technik auf diese Weise mehr als 90 % der eingestrahlten Energie verloren. Insgesamt liegt also ein ausgesprochen schlechter Wirkungsgrad vor.

Hinzu kommt, dass die bekannten optischen Strahlformungssysteme einschließlich der vorgenannten Homogenisierer jeweils aus einer Mehrzahl von optischen Bauelementen zusammengesetzt sind. Daraus ergibt sich, dass deren Herstellung und Justierung aufwendig und kostspielig ist.

Aus der US-Patentschrift US 4,859,043 A ist ein optisches Strahlformungssystem der eingangs genannten Art bekannt. Das darin beschriebene optische Strahlformungssystem umfasst ein optisches Element mit zwei refraktiven Grenzflächen, die als Eintrittsflächen und als Austrittsflächen für von einer Glühlampe ausgehendem Licht ausgebildet sind. Sowohl auf der Eintrittsfläche als auch auf der Austrittsfläche ist ein Array von Zylinderlinsen angeordnet, wobei die Zylinderachsen dieser Zylinderlinsen senkrecht zueinander ausgerichtet sind. Die Zylinderlinsen sind dabei derart ausgebildet, dass sie Fresnellinsen bilden. Sowohl die Eintrittsfläche als auch die Austrittsfläche weist eine gekrümmte zylindrische Grundform auf, wobei die Zylinderachsen dieser gekrümmten Grundformen parallel zueinander verlaufen. Damit weist das optische Element im wesentlichen eine hohlzylindrische, insbesondere eine halbzylindrische Form auf, wobei dieser Halbzylinder die Glühlampe teilweise umgibt. Durch die Krümmung der zylindrischen Grundformen von Eintritts- und Austrittsfläche kann das von der Glühlampe ausgehende Licht teilweise derart abgelenkt werden, dass die Divergenz des Lichtes in einer Richtung senkrecht zur Zylinderachse der Grundformen reduziert wird. Eine weitere Reduktion bis zur vollständigen Kollimation wird durch ein weiteres optisches Element erzielt, das in Ausbreitungsrichtung des Lichtes hinter dem vorgenannten optischen Element angeordnet ist.

Ausgehend von dem gattungsgemäßen Stand der Technik ergibt sich daraus die Aufgabe der Erfindung, die vorgenannten Probleme zu lösen, insbesondere ein optisches Strahlformungssystem zur Verfügung zu stellen, welches bei der Möglichkeit zur Beeinflussung der Strahlparameter einen besseren Wirkungsgrad hat und einfacher aufgebaut ist.

Dies wird erfindungsgemäß durch ein optisches Strahlformungssystem der eingangs genanten Art mit den kennzeichnenden Merkmale des Anspruchs 1 erreicht. Die Unteransprüche betreffen bevorzugte Ausgestaltungen der Erfindung.

Die Erfindung geht von der Erkenntnis aus, dass sich die in den bisher bekannten Strahlformungssystemen verwendeten, ebenen Linsenarrays und die übrigen optischen Bauelemente, beispielsweise Abbildungslinsen und dergleichen, in einem einzigen oder einigen wenigen monolithischen optischen Elementen integrieren lassen. Diese erfindungsgemäßen monolithischen optischen Elemente zeichnen sich dadurch aus, dass die refraktiven Grenzflächen, beispielsweise die eingangsseitige und ausgangsseitige Oberfläche einer Linse, eine gekrümmte Basisform bilden, deren Oberfläche quasi mit den kleineren Linsenflächen der einzelnen Linsen eines Linsenarrays moduliert, d.h. überlagert ist.

Neben dem offensichtlichen Vorteil, dass sich auf diese Weise die Anzahl der verwendeten Bauelemente drastisch reduzieren lässt, indem beispielsweise alle bisher in einem Homogenisator verwendeten Bauelemente in einem einzigen monolithischen Element zusammengefasst werden können, ergibt sich darüber hinaus ein weiterer Vorteil, der überhaupt erst durch die monolithische Integration eröffnet wird: durch die beliebige Form und Ausrichtung des Linsenarrays unter Berücksichtigung der gekrümmten Grundform, ist es erstmals möglich, durch dessen Formgebung eine nahezu beliebige Beeinflussung der Strahlparameter hinsichtlich Geometrie und Intensitätsverteilung vorzugeben, d.h. quasi in dem monolithischen Element zu programmieren. Da hierbei keine absorbierenden Bauteile, wie Filter oder Masken verwendet werden, werden im Vergleich zum Stand der Technik hohe Wirkungsgrade erreicht. In der Regel werden dabei die Absorptionsverluste vernachlässigbar gering sein.

Die Realisierung der gewünschten Eigenschaften, die eine gezielte Beeinflussung aller Strahlparameter einschließt. erfordert zwar im Einzelfall einen gewissen Rechenaufwand zur Bestimmung der Grenzflächengeometrie, der jedoch angesichts der zur Verfügung stehenden Rechnerkapazität nicht weiter nachteilig ins Gewicht fällt. Dem steht der weitere Vorteil gegenüber, dass die erfindungsgemäßen monolithischen optischen Elemente nach ihrer Fertigung keiner weiteren Justierung bedürfen und sich insofern im Laufe der Zeit auch nicht dejustieren können.

Grundsätzlich ermöglicht es die Erfindung in jeweils vorteilhafter Weise, die vormals erforderlichen, separaten Bauelemente eines optischen Strahlformungssystems in einem einzigen optischen Element zusammenzufassen. Hierzu kann es je nach Maßgabe des Einzelfalls zweckmäßig und vorteilhaft sein, dass die Grundform einer im Strahlengang liegenden Oberfläche, d. h. der Grenzfläche, des monolithischen optischen Elements konkav oder konvex ist und zylindrisch ausgeformt ist.

Die Grenzfläche, d. h. die Grundform, kann sowohl rotationssymmetrisch oder elliptisch sein als auch jede andere denkbare geometrische Form annehmen. Für die einzelnen Linsen eines Linsenarrays gilt dies gleichermaßen. So können beispielsweise streifenförmige Linsen in eine viereckige Grundfläche eingeformt sein oder auch facettenartige Linsen auf einer rotationssymmetrischen - beispielsweise kreisrunden - oder elliptischen Grundform rotationssymmetrisch angeordnet sein.

Bevorzugte Weiterbildungen der Erfindung sehen vor, dass die einzelnen Zylinderlinsen eines Arrays unterschiedliche Brennweiten und/oder unterschiedliche Aperturen aufweisen. Durch diese Maßnahmen lässt sich die Intensität im Focus derart modulieren, so dass beispielsweise Gaußprofile oder beliebige andere Verteilungen vorgegeben werden können.

Durch die sich daraus ergebenden Kombinationsmöglichkeiten, die bei der Auslegung praktisch nahezu völlige Freiheit im Hinblick auf die Brennweiten, Aperturen, Grenzflächenformen und die Anordnungen der optischen Achsen im Raum lassen, lässt sich eine Strahlformung, d. h. eine Beeinflussung der Strahlparameter im Hinblick auf Geometrie und Intensität, in nahezu beliebiger Weise in dem erfindungsgemäßen optischen Element integrieren, d. h. programmieren.

Es kann weiterhin zweckmäßig sein, dass ein Linsenarray als Linsenmatrix ausgebildet ist, d. h. als zweidimensionales Array mit einer Mehrzahl von rasterförmig angeordneten Linsenflächen, oder auch als eindimensionales Array, bei dem beispielsweise eine Mehrzahl von Zylinderlinsenflächen linear nebeneinander angeordnet ist. Diese können unterschiedliche Aperturen, d. h. Breiten und auch voneinander abweichende Brennweiten haben.

Eine bevorzugte Ausführungsform des erfindungsgemäßen Strahlformungssystems sieht vor, dass die Zylinder-Längsachsen der auf den beiden Grenzflächen des optischen Elements angeordneten Arrays von Zylinderlinsen zueinander gekreuzt angeordnet sind. Auf diese Weise lässt sich ein Homogenisierer, wie er im Stand der Technik aus einer Mehrzahl von Zylinderlinsenarrays und Abbildungslinsen aufgebaut ist, in einem einzigen optischen Bauelement realisieren. Dabei ist nicht nur eine spätere Dejustierung ausgeschlossen; durch den Wegfall mehrerer Grenzflächen werden auch die daran entstehenden unvermeidlichen Verluste reduziert, wodurch sich eine Steigerung des Gesamtwirkungsgrades ergibt.

Gemäß bevorzugter Ausführungsformen der Erfindung können die Arrays, wie nach dem Stand der Technik üblich, konvexe Zylinderlinsen aufweisen. Besondere Vorteile ergeben sich jedoch dadurch, dass die Arrays konkave Zylinderlinsen aufweisen. Konvexe Linsen haben nämlich prinzipiell den Nachteil, einen reellen Brennpunkt aufzuweisen, in dem die Energiedichte unter Umständen so weit ansteigen kann, dass entweder Verluste durch lonisation oder Schäden im optischen Material auftreten können. Hingegen haben konkave Zylinderlinsen lediglich einen virtuellen Brennpunkt, so dass Verluste durch die vorgenannten Effekte prinzipiell nicht auftreten können.

Grundsätzlich können zur praktischen Realisierung des erfindungsgemäßen monolithischen Elements alle verfügbaren optischen Materialien eingesetzt werden, etwa entsprechend hochwertige Kunststoffe oder Gläser. Die zur Herstellung verwendeten Fertigungsverfahren müssen dann auf das jeweils zum Einsatz gelangende Material abgestimmt werden. Die Umsetzung der bei der Integration der unterschiedlichen optischen Flächen erforderliche Freiformflächengeometrie wird zweckmäßigerweise durch rechnergestützte Fertigungsverfahren umgesetzt.

Gemäß einer bevorzugten Ausführungsform der Erfindung kann vorgesehen sein, dass die Zylinder-Längsachsen der Zylinderlinsen jeweils parallel zu den Zylinder-Längsachsen der Grenzflächen ausgerichtet sind, auf denen sie angeordnet sind.

Ausführungsbeispiele erfindungsgemäßer Strahlformungssysteme werden im Folgenden anhand der Zeichnungen näher erläutert. Es zeigen im einzelnen:
- Fig. 1: ein erfindungsgemäßes monolithisches optisches Element in einer ersten Ausführungsform;
- Fig. 2: ein erfindungsgemäßes monolithisches optisches Element in einer zweiten Ausführungsform;
- Fig. 3: ein erfindungsgemäßes monolithisches optisches Element in einer dritten Ausführungsform.

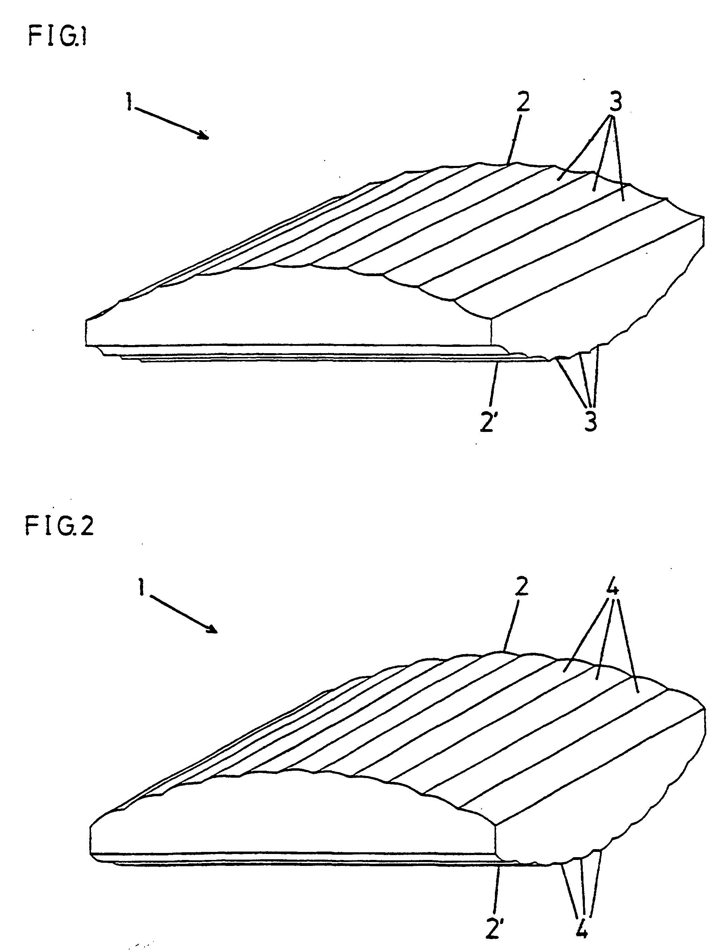

In Fig. 1 ist ein erfindungsgemäßes, monolithisches optisches Element in einer perspektivischen Ansicht dargestellt und als Ganzes mit dem Bezugszeichen 1 versehen. In der dargestellten Ansicht bildet die oben liegende Grenzfläche 2 die Lichteintrittsfläche und die unten liegende Grenzfläche 2' die Lichtaustrittsfläche - oder umgekehrt.

Beide Grenzflächen 2, 2' weisen eine konvex-zylindrische Grundform auf. Dabei sind die Zylinder gekreuzt angeordnet.

Sowohl in die obere Grenzfläche 2 als auch in die untere Grenzfläche 2' ist jeweils ein ein-dimensionales Array von konkaven Zylinderlinsen 3 eingeformt. Die Zylinder-Längsachsen der Zylinderlinsen 3 liegen jeweils parallel zu den Zylinder-Längsachsen der Grenzflächen 2 bzw. 2'.

In der dargestellten Ausführungsform bildet das monolithische optische Element 1 bereits einen Homogenisierer mit definierten optischen Eigenschaften. Durch die Ausformung der Zylinderlinsen 3 sowie der Grenzflächen 2, 2' wird bereits bei der Herstellung eine vordefinierte Beeinflussung der Strahlparameter vorgegeben.

An dieser Ausführungsform ist besonders vorteilhaft, dass die Zylinderlinsen 3 konkav sind und somit keinen reellen Brennpunkt im Inneren des monolithischen optischen Elements 1 aufweisen. Hierdurch werden hohe Energiedichten vermieden, die zu einer Beschädigung des optischen Materials führen könnten.

In Fig. 2 ist in derselben Darstellung wie in Figur 1. ein ähnlich aufgebautes monolithisches optisches Element dargestellt, welches ebenfalls mit dem Bezugszeichen 1 versehen ist. Der einzige Unterschied zu Figur 1 besteht darin, dass die in dessen Grenzflächen 2, 2' eingeformten Zylinderlinsen 4 konvexzylindrisch ausgebildet sind.

Die Vorteile der in den Figuren 1 und 2 dargestellten Homogenisierer liegen darin, dass sie lediglich zwei Grenzflächen aufweisen und somit einen besonders hohen Wirkungsgrad haben. Weiterhin sind sie gegenüber aus mehreren optischen Elementen aufgebauten Homogenisierern insgesamt einfacher konstruiert und erfordern auch keine Justierung.

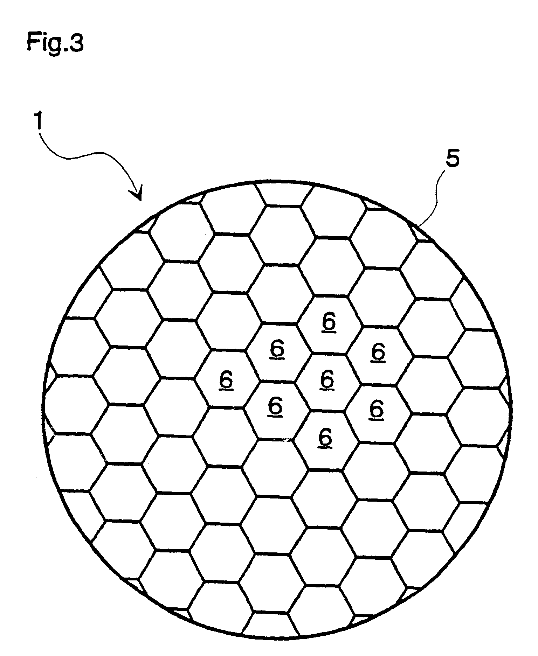

In Fig. 3 ist eine axiale Ansicht auf eine Grenzfläche 5 eines erfindungsgemäßen refraktiven Elements 1 in einer weiteren Ausführungsform dargestellt. Die Besonderheit besteht dabei darin, dass die Grundform, d. h. die Grenzfläche 5, kreisrund ausgebildet ist. Auf der runden Gundfläche, die erfindungsgemäß eine aus der Zeichenebene heraus gekrümmte, d. h. eine zylindrisch konvexe, Grundform aufweist, sind rotationssymmetrisch facettenartig einzelne zylindrische Linsen 6 eingeformt. Diese können erfindungsgemäß wiederum konvex oder konkav ausgebildet sein und unterschiedliche Brennweiten und/oder Aperturen haben. In gleicher Weise kann die Grenzfläche 5 ebenfalls elliptisch sein.

Durch eine computergestützte Herstellung können monolithische optische Elemente 1 praktisch für alle geforderten Beeinflussungen der Strahlparameter mit relativ geringem Aufwand hergestellt werden.

## Patentansprüche

1. Optisches Strahlformungssystem, umfassend ein monolithisches optisches Element (1) mit zwei refraktiven Grenzflächen (2, 2', 5), die als Eintritts- und Austrittsflächen für ein Strahlbündel dienen können, wobei auf jeder der Grenzflächen (2, 2', 5) ein Array von Zylinderlinsen (3, 4, 6) angeordnet ist und wobei jede der Grenzflächen (2, 2', 5) eine gekrümmte, zylindrische Grundform aufweist, der eine Zylinder-Längsachse zugeordnet werden kann,
**dadurch gekennzeichnet, dass**
die zylindrischen Grundformen der Grenzflächen (2, 2', 5) konvex gekrümmt sind und ihre Zylinder-Längsachsen senkrecht zueinander ausgerichtet sind.

2. Strahlformungssystem nach Anspruch 1, **dadurch gekennzeichnet, dass** Zylinderlinsen (3, 4, 6) eines Arrays unterschiedliche Brennweiten aufweisen.

3. Strahlformungssystem nach Anspruch 1, **dadurch gekennzeichnet, dass** die Zylinderlinsen (3, 4, 6) eines Arrays unterschiedliche Aperturen aufweisen.

4. Strahlformungssystem nach Anspruch 1, **dadurch gekennzeichnet, dass** die Zylinderlinsen (3, 4, 6) eines Arrays unterschiedlich ausgerichtete optische Achsen aufweisen.

5. Strahlformungssystem nach Anspruch 1, **dadurch gekennzeichnet, dass** ein Array von Zylinderlinsen (3, 4, 6) ein eindimensionales Array ist.

6. Strahlformungssystem nach Anspruch 1, **dadurch gekennzeichnet, dass** ein Array von Zylinderlinsen (3, 4, 6) ein zweidimensionales Array ist.

7. Strahlformungssystem nach Anspruch 1, **dadurch gekennzeichnet, dass** die Zylinder-Längsachsen der auf den beiden Grenzflächen (2, 2', 5) des optischen Elementes (1) als Arrays angeordneten Zylinderlinsen (3, 4, 6) zueinander gekreuzt angeordnet sind.

8. Strahlformungssystem nach Anspruch 1, **dadurch gekennzeichnet, dass** die Arrays konkave Zylinderlinsen aufweisen.

9. Strahlformungssystem nach Anspruch 1, **dadurch gekennzeichnet, dass** die Arrays konvexe Zylinderlinsen aufweisen.

10. Strahlformungssystem nach Anspruch 1, **dadurch gekennzeichnet, dass** die Zylinder-Längsachsen der Zylinderlinsen (3, 4, 6) jeweils parallel zu den Zylinder-Längsachsen der Grenzflächen (2, 2', 5) ausgerichtet sind, auf denen sie angeordnet sind.

## Claims

1. Optical beam shaping system comprising a monolithic optical element (1) having two refractive boundary surfaces (2, 2', 5) which can serve as entrance and exit surfaces for a beam, an array of cylindrical lenses (3, 4, 6) being arranged on each of the boundary surfaces (2, 2', 5), and each of the boundary surfaces (2, 2', 5) having a curved, cylindrical basic shape which can be assigned a longitudinal cylinder axis, **characterized in that** the cylindrical basic shapes of the boundary surfaces (2, 2', 5) are convexly curved and their longitudinal cylinder axes are aligned perpendicular to one another.

2. Beam shaping system according to Claim 1, **characterized in that** cylindrical lenses (3, 4, 6) of an array have different focal lengths.

3. Beam shaping system according to Claim 1, **characterized in that** the cylindrical lenses (3, 4, 6) of an array have different apertures.

4. Beam shaping system according to Claim 1, **characterized in that** the cylindrical lenses (3, 4, 6) of an array have differently aligned optical axes.

5. Beam shaping system according to Claim 1, **characterized in that** an array of cylindrical lenses (3, 4, 6) is a one-dimensional array.

6. Beam shaping system according to Claim 1, **characterized in that** an array of cylindrical lenses (3, 4, 6) is a two-dimensional array.

7. Beam shaping system according to Claim 1, **characterized in that** the longitudinal cylinder axes of the cylindrical lenses (3, 4, 6) arranged as arrays on the two boundary surfaces (2, 2', 5) of the optical element (1) are arranged crossed in relation to one another.

8. Beam shaping system according to Claim 1, **characterized in that** the arrays have concave cylindrical lenses.

9. Beam shaping system according to Claim 1, **characterized in that** the arrays have convex cylindrical lenses.

10. Beam shaping system according to Claim 1, **characterized in that** the longitudinal cylinder axes of the cylindrical lenses (3, 4, 6) are respectively aligned parallel to the longitudinal cylinder axes of the boundary surfaces (2, 2', 5) on which they are arranged.

## Revendications

1. Système de mise en forme de rayon optique, comprenant un élément optique monolithique (1) doté de deux surfaces limites (2, 2', 5) réfractives qui peuvent servir de surfaces d'entrée et de sortie pour un faisceau de rayons, un réseau de lentilles cylindriques (3, 4, 6) étant disposé sur chacune des surfaces limites (2, 2', 5) et chacune des surfaces limites (2, 2', 5) présentant une forme de base cylindrique courbée à laquelle peut être associé un axe longitudinal de cylindre, **caractérisé en ce que** les formes de base cylindriques des surfaces limites (2, 2', 5) sont courbées de manière convexe et les axes longitudinaux de leurs cylindres sont dirigés perpendiculairement l'un par rapport à l'autre.

2. Système de mise en forme de rayon optique selon la revendication 1, **caractérisé en ce que** les lentilles cylindriques (3, 4, 6) d'un réseau présentent des distances focales différentes.

3. Système de mise en forme de rayon optique selon la revendication 1 , **caractérisé en ce que** les lentilles cylindriques (3, 4, 6) d'un réseau présentent des ouvertures différentes.

4. Système de mise en forme de rayon optique selon la revendication 1, **caractérisé en ce que** les lentilles cylindriques (3, 4, 6) d'un réseau présentent des axes optiques orientés différemment.

5. Système de mise en forme de rayon optique selon la revendication 1, **caractérisé en ce qu'**un réseau de lentilles optiques (3, 4, 6) est un réseau en une dimension.

6. Système de mise en forme de rayon optique selon la revendication 1, **caractérisé en ce qu'**un réseau de lentilles optiques (3, 4, 6) est un réseau en deux dimensions.

7. Système de mise en forme de rayon optique selon la revendication 1, **caractérisé en ce que** les axes longitudinaux des cylindres des lentilles cylindriques (3, 4, 6) disposées sous la forme de réseaux sur les deux surfaces limites (2, 2', 5) de l'élément optique (1) sont disposés en croix l'un par rapport à l'autre.

8. Système de mise en forme de rayon optique selon la revendication 1, **caractérisé en ce que** les réseaux présentent des lentilles cylindriques concaves.

9. Système de mise en forme de rayon optique selon la revendication 1, **caractérisé en ce que** les réseaux présentent des lentilles cylindriques convexes.

10. Système de mise en forme de rayon optique selon la revendication 1, **caractérisé en ce que** les axes longitudinaux des cylindres des lentilles cylindriques (3, 4, 6) sont à chaque fois orientés parallèlement aux axes longitudinaux des cylindres des surfaces limites (2, 2', 5) sur lesquelles elles sont disposées.
